(19) Europäisches Patentamt
European Patent Office
Office européen des brevets

(11) **EP 3 052 794 B1**

(12) **EUROPÄISCHE PATENTSCHRIFT**

(45) Veröffentlichungstag und Bekanntmachung des Hinweises auf die Patenterteilung:
**26.12.2018   Patentblatt 2018/52**

(21) Anmeldenummer: **14780839.8**

(22) Anmeldetag: **02.10.2014**

(51) Int Cl.:
*G01M 15/02* *(2006.01)*      *G01M 15/04* *(2006.01)*
*F02F 1/00* *(2006.01)*      *G01L 5/00* *(2006.01)*
*G01N 19/02* *(2006.01)*      *F02B 77/08* *(2006.01)*

(86) Internationale Anmeldenummer:
**PCT/EP2014/071138**

(87) Internationale Veröffentlichungsnummer:
**WO 2015/049330 (09.04.2015 Gazette 2015/14)**

(54) **EINRICHTUNG ZUR REIBUNGSMESSUNG AN EINER ZYLINDER-KOLBEN-ANORDNUNG**

DEVICE FOR MEASURING FRICTION ON A CYLINDER/PISTON ARRANGEMENT

DISPOSITIF DE MESURE DU FROTTEMENT DANS UN ENSEMBLE CYLINDRE-PISTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2013   AT 506392013**

(43) Veröffentlichungstag der Anmeldung:
**10.08.2016   Patentblatt 2016/32**

(73) Patentinhaber: **AVL List GmbH**
**8020 Graz (AT)**

(72) Erfinder:
• **HAMMER, Michael Erich**
  **A-8054 Seiersberg-Pirka (AT)**
• **MELDT, Wolfgang**
  **A-8062 Kumberg (AT)**

(74) Vertreter: **Babeluk, Michael**
**Florianigasse 26/3**
**1080 Wien (AT)**

(56) Entgegenhaltungen:
WO-A1-2005/068814      WO-A1-2012/062725
DE-A1- 19 926 794      DE-B4- 19 861 213
US-A1- 2010 095 838

**Beschreibung**

Die Erfindung betrifft eine Einrichtung zur Reibungsmessung an einer Zylinder-Kolben-Anordnung, wobei ein hin- und hergehender Kolben in einer von einem Zylinderkopf entkoppelten Zylinderlaufbuchse einer Laufbuchseneinheit angeordnet ist und die Laufbuchseneinheit in einem mit einem Sensorträger verbundenen Laufbuchsenträger angeordnet ist, welcher einen konzentrisch zur Zylinderachse ausgebildeten drehsymmetrischen Aufnahmebereich für die Zylinderlaufbuchse aufweist.

Aus der Integration der Kräfte entlang der Kolbenlaufbahn in Zylinderrichtung kann die Reibung zwischen der aus Kolben und Kolbenringen bestehenden Kolbengruppe und der Zylinderlauffläche ermittelt werden.

Aus der WO 2012/062725 A1 ist eine Einrichtung zur Reibungsmessung an einer Zylinder-Kolben-Anordnung bekannt, wobei eine innere Mantelfläche der Zylinderlaufbuchse gegenüber einem Zylinderkopf abgedichtet ist, indem zwischen der inneren Mantelfläche und einem in die Zylinderlaufbuchse hineinragenden Absatz des Zylinderkopfes ein Dichtelement angeordnet ist.

Eine ähnliche Einrichtung ist durch die JP 2010-243390 A offenbart.

Aus der JP 60-031037 A ist eine Messeinrichtung zur Messung der Reibung eines in einer Zylinderlaufbuchse hin- und hergehenden Kolbens bekannt. Dabei ist zwischen dem Zylinderkopf und einem Laufbuchsenträger ein Haltering angeordnet, wobei zwischen dem Haltering und dem oberen Ende der Zylinderlaufbuchse ein Ringspalt ausgebildet ist, welcher durch eine metallische Dichtplatte gefüllt ist.

Aus der JP 59-088638 A ist eine Einrichtung zur Messung der Kolbenreibung bei einer Brennkraftmaschine bekannt, wobei die Zylinderlaufbuchse in einem Zylinder angeordnet ist, und wobei zwischen dem Zylinder und der Zylinderlaufbuchse mehrere O-Ringe angeordnet sind.

Die WO 2005/068 814 A1 offenbart einen Zylinderblock für eine Brennkraftmaschine mit einer Laufbuchseneinheit, die über einen Kegelsitz im Laufbuchsenträger gelagert ist, wobei zumindest eine kegelige innere Mantelfläche des Aufnahmebereichs eine erste Sitzfläche und eine reziprok zur ersten Sitzfläche geformte kegelige äußere Mantelfläche der Laufbuchseneinheit eine zweite Sitzfläche des Kegelsitzes zur Aufnahme und Zentrierung der Zylinderlaufbuchse ausbildet.

Um unterschiedliche Zylinderlaufbuchsen testen zu können, müssen in Einrichtungen zur Reibungsmessung der genannten Art die Zylinderlaufbuchsen häufig getauscht werden.

Bekannte Einrichtungen zur Reibungsmessung weisen den Nachteil auf, dass bei einem Austausch der Zylinderlaufbuchse der Laufbuchsenträger vom Kraftsensor getrennt werden muss. Dies macht eine Neukalibrierung der Sensorik bei jedem Austausch der Zylinderlaufbuchsen notwendig. Weiters muss bei jedem Tausch der Zylinderlaufbuchse die Kühlmittelführung mit relativ großem Aufwand leckagefrei gemacht werden.

Aufgabe der Erfindung ist es, diese Nachteile zu vermeiden und einen einfachen Austausch der Zylinderlaufbuchse zu ermöglichen.

Erfindungsgemäß wird dies dadurch erreicht, dass die Laufbuchseneinheit einen Buchsenrahmen aufweist, wobei die Zylinderlaufbuchse im Buchsenrahmen angeordnet ist, und die Laufbuchseneinheit über einen Kegelsitz im Laufbuchsenträger gelagert ist, wobei zumindest eine kegelige innere Mantelfläche des Aufnahmebereiches eine erste Sitzfläche und eine reziprok zur ersten Sitzfläche geformte kegelige äußere Mantelfläche des Buchsenrahmens eine zweite Sitzfläche des Kegelsitzes zur Aufnahme und Zentrierung der Zylinderlaufbuchse ausbildet.

Dadurch kann die die Zylinderlaufbuchse aufweisende Laufbuchseneinheit sehr einfach in den Laufbuchsenträger eingesetzt und wieder aus diesem entnommen werden, ohne dass der Laufbuchsenträger demontiert werden muss. Ein Wechsel der Zylinderlaufbuchse kann somit erfolgen, ohne dass eine Neukalibrierung der Sensorik (Kraftsensoren) durchgeführt werden muss. Der Kegelsitz ermöglicht eine einfache Selbstzentrierung der Zylinderlaufbuchse im Laufbuchsenträger quer zur Zylinderachse und stellt einen lagerichtigen Einbau der Zylinderlaufbuchse sicher.

Der Laufbuchsenträger kann indirekt die Zylinderlaufbuchse aufnehmen. Dabei ist in bei einer Ausführung der Erfindung vorgesehen, dass Zylinderlaufbuchse und Buchsenrahmen fest miteinander verbunden sind. Der Buchsenrahmen kann dabei die zweite Sitzfläche bilden. Besonders vorteilhaft ist es, wenn zwischen dem - vorzugsweise im Wesentlichen hülsenartigen - Buchsenrahmen und einer äußeren Mantelfläche der Zylinderlaufbuchse der zumindest eine Kühlflüssigkeitsmantel ausgebildet ist. Um auf möglichst einfache Weise Leckagefreiheit zu erreichen, können Zylinderlaufbuchse und Buchsenrahmen durch Verpressen miteinander verbunden sein. Dies ermöglicht eine flüssigkeitsdichte Verbindung zwischen Zylinderlaufbuchse und Buchsenrahmen, ohne dass weitere Dichtungselemente erforderlich wären.

Der Kühlflüssigkeitsmantel kann - zumindest teilweise - am äußeren Umfang der Zylinderlaufbuchse und/oder am inneren Umfang des Buchsenrahmens angeordnet und in diese eingeformt sein.

Vorzugsweise weist die erste Sitzfläche in Bezug zur Zylinderachse der Zylinderlaufbuchse einen sich in Richtung des Zylinderkopfes öffnenden Öffnungswinkel auf, welcher vorzugsweise zwischen 5° und 15°, besonders vorzugsweise etwa 10°, beträgt.

Wird die Zylinderlaufbuchse indirekt vom Laufbuchsenträger aufgenommen, so befindet sich der Buchsenrahmen zwischen dem Laufbuchsenträger und der Zylinderlaufbuchse. Der Kegelsitz wird somit durch den Laufbuchsenträger und dem Buchsenrahmen gebildet. Eine reziprok zur ersten Sitzfläche des Kegelsitzes geformte kegelige äußere Mantelfläche des Buchsenrahmens bildet in diesem Fall eine zweite Sitzfläche des Kegelsitzes aus.

Die Zylinderlaufbuchse und/oder der Buchsenrahmen können über einen Haltering am Laufbuchsenträger befestigt sein.

Die Erfindung wird im Folgenden anhand der in den Figuren dargestellten, nicht einschränkenden, Ausführungsbeispiele näher erläutert. Es zeigen:

Fig. 1      eine erfindungsgemäße Einrichtung in einem Längsschnitt in einer die Zylinderachse beinhaltenden Ebene, in einer ersten Ausführungsvariante;

Fig. 1a      das Detail I aus Fig. 1;

Fig. 2      Laufbuchsenträger und Zylinderlaufbuchse der in Fig. 1 gezeigten ersten Ausführungsvariante in einem schematischen Längsschnitt;

Fig. 3      Laufbuchsenträger und Zylinderlaufbuchse gemäß dem Stand der Technik in einem schematischen Längsschnitt;

Fig. 4      Laufbuchsenträger und Zylinderlaufbuchse gemäß dem Stand der Technik in einem schematischen Längsschnitt; und

Fig. 5      Laufbuchsenträger und Zylinderlaufbuchse gemäß dem Stand der Technik in einem schematischen Längsschnitt.

Funktionsgleiche Teile sind in den nachfolgenden Ausführungsvarianten mit gleichen Bezugszeichen versehen.

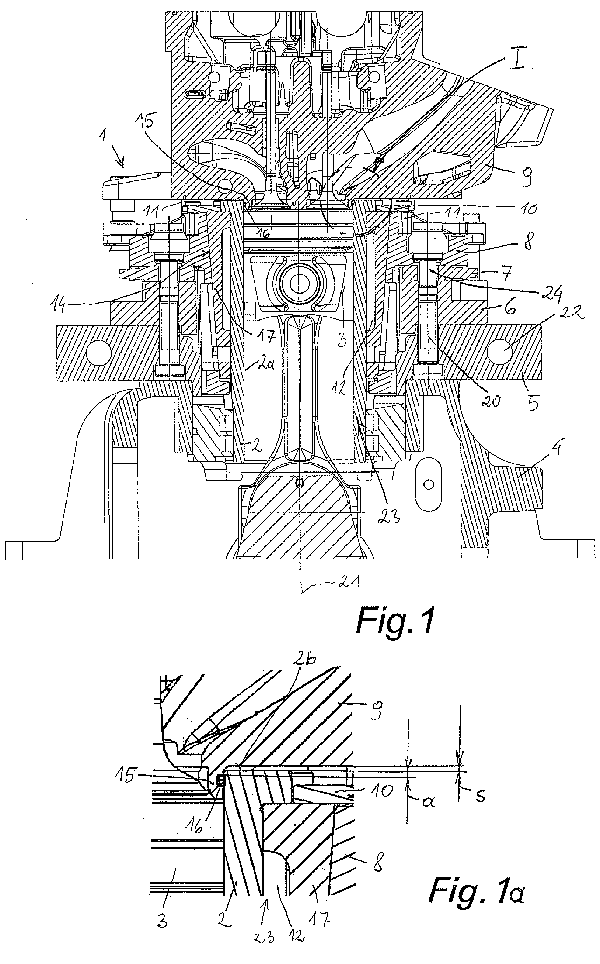

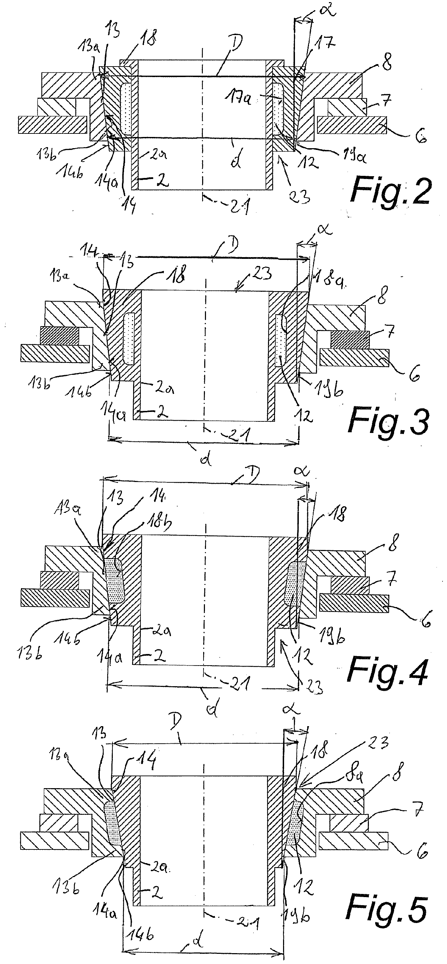

Die in Fig. 1 dargestellte Einrichtung 1 zur Reibungsmessung der Reibungskräfte zwischen einem in einer Zylinderlaufbuchse 2 einer Laufbuchseneinheit 23 hin- und hergehenden Kolben 3 weist ein Grundaggregat 4, eine Grundplatte 5, einen Sensorträger 6 zur Aufnahme von 3-D-Kraftsensoren 7, einen Laufbuchsenträger 8 und einen Zylinderkopf 9 auf. Die Grundplatte 5 ist über - nicht weiter dargestellte Schrauben am Grundaggregat 4 befestigt. Die Zylinderlaufbuchse 2 ist über einen Haltering 10 am Laufbuchsenträger 8 befestigt, wobei der Haltering 10 mittels Schrauben 11 am Laufbuchsenträger 8 angeschraubt ist. Der Laufbuchsenträger 8 ist über die Kraftsensoren 7 durch Halteschrauben 24 mit dem Sensorträger 6 und weiters über Schrauben 20 mit der Grundplatte 5 fest verbunden. Im Bereich zwischen der Zylinderlaufbuchse 2 und dem Laufbuchsenträger 8 ist ein Kühlflüssigkeitsmantel 12 ausgebildet, welcher mit nicht weiter dargestellten Zu- und Abflussleitungen verbunden ist. Die Laufbuchseneinheit 23 weist die den Zylinder für den Kolben 3 bildende Zylinderlaufbuchse 2 samt Buchsenbund 18, den Kühlflüssigkeitsmantel 12 und - in den in Fig. 1 und Fig. 2 gezeigten Ausführungen - einen die Zylinderlaufbuchse 2 aufnehmenden Buchsenrahmen 17 auf.

Wie in Fig. 1 ersichtlich ist, weist der Zylinderkopf 9 einen in die Zylinderlaufbuchse 2 hineinragenden scheibenförmigen Absatz 15 auf, in dessen äußerer Mantelfläche eine Ringnut zur Aufnahme eines ringförmigen Dichtelementes 16 angeordnet ist, welches ähnlich einem Kolbenring durch die Gaskräfte gegen die innere Mantelfläche 2a der Zylinderlaufbuchse 2 gepresst wird. Zwischen dem Dichtelement 16 und dem oberen Rand 2b der Zylinderlaufbuchse 2 ist ein axialer Abstand a vorgesehen, in welchem Fertigungstoleranzen der Zylinderlaufbuchse 2 und des Zylinderkopfes 9 berücksichtigt sind (Fig. 1a).

Durch die spezielle Abdichtung mittels des ringförmigen Dichtelementes 16 und des Absatzes 15 im Zylinderkopf 9 wird verhindert, dass die Gaskräfte axial auf die Zylinderlaufbuchse 2 einwirken. Somit haben diese auch keinen direkten Einfluss auf das Messergebnis und es werden hauptsächlich die Reibungskräfte des Kolbens 3 bzw. die Kolbenseitenkräfte auf die Kraftsensoren 7 übertragen. Die Zylinderlaufbuchse 2 ist somit vom Grundaggregat 4 und vom Zylinderkopf 9 weitgehend entkoppelt und nur durch das Dichtelement 16 und die Kraftsensoren 7 an diese angebunden.

Um im Messbetrieb des Motors die normal zur Kolbenlaufrichtung auf die Kraftsensoren 7 wirkenden Kräfte, die nicht von der Bewegung des Kolbens 3 stammen (Kräfte auf Grund von unterschiedlichen Wärmedehnungen) und die somit das Messergebnis verfälschen können, zu reduzieren, muss gewährleistet werden, dass vor Beginn der Messungen die am Kraftsensor 7 angreifenden Teile (Laufbuchsenträger 8, Sensorträger 6) ähnliche Temperaturen aufweisen. Damit können ähnliche Wärmedehnungen dieser Teile realisiert und somit der Einfluss der dadurch entstehenden Querkräfte auf die Kraftsensoren 7 verringert werden.

Zu diesem Zweck ist die Grundplatte 5 mit Konditionierkanälen 22 mit einem nicht dargestellten Eintritt und einem Austritt für Kühlflüssigkeit versehen, um die Grundplatte 5 und somit den darauf verschraubten Sensorträger 6 und den im selben Kühlflüssigkeitskreislauf angeordneten Laufbuchsenträger 8 auf die gleiche Temperatur zu bringen.

Der Laufbuchsenträger 8 weist einen drehsymmetrische Aufnahmebereich 13 für die Zylinderlaufbuchse 2 auf. Der Innendurchmesser D des Aufnahmebereiches 13 ist in zumindest einem zylinderkopfnahen ersten Abschnitt 13a größer, als der Innendurchmesser d des Aufnahmebereiches 13 in einem zylinderkopffernen zweiten Abschnitt 13b.

Insbesondere kann der Aufnahmebereich 13 kegelig ausgebildet sein, wobei eine kegelige innere Mantelfläche des Aufnahmebereiches 13 eine erste Sitzfläche 14a eines Kegelsitzes 14 zur Aufnahme der Zylinderlaufbuchse 2 bildet. Eine reziprok zur ersten Sitzfläche 14a geformte kegelige äußere Mantelfläche der Zylinderlaufbuchse 2, insbesondere eines Buchsenbundes 18 der Zylinderlaufbuchse 2 (Fig. 3 bis Fig. 5), oder des Buchsenrahmens 17 (Fig. 2), bildet eine zweite Sitzfläche 14b des Kegelsitzes 14 aus.

Die kegeligen ersten und zweiten Sitzflächen 14a, 14b weisen jeweils in Bezug zur Zylinderachse 21 einen sich in Richtung des Zylinderkopfes 9 öffnenden Öffnungswinkel $\alpha$ auf.

Zwischen der Zylinderlaufbuchse 2 und dem Zylinderkopf 9 ist ein Spalt s in axialer Richtung notwendig, welcher sich durch die Fertigungstoleranzen der Laufbuchseneinheit 23, insbesondere der Zylinderlaufbuchse 2 und dem Laufbuchsenträger 8, ergeben. Die Wahl des Öffnungswinkels $\alpha$ hängt daher einerseits von den radialen Fertigungstoleranzen der Laufbuchseneinheit 23, insbesondere der Zylinderlaufbuchse 2 und des Buchsenrahmens 17, sowie des Laufbuchsenträgers 8, und den damit auftretenden axialen Verschiebungen der Laufbuchseneinheit 23 ab.

Mit der fertigungsbedingten maximal möglichen radialen Abweichung $\varepsilon_L$ der Laufbuchseneinheit 21 und der maximal möglichen radialen Abweichung $\varepsilon_C$ des Buchsenrahmens 17 vom Auslegungswert ergibt sich für den Öffnungswinkel $\alpha$:

$$\alpha > \arctan\left(\frac{|\varepsilon_L| + |\varepsilon_C|}{2 \cdot s}\right)$$

Andererseits ist eine Selbsthemmung der kegeligen ersten und zweiten Sitzflächen 14a, 14b nicht erwünscht.

Um Selbsthemmung zu vermeiden, sollte für den Öffnungswinkel $\alpha$ gelten:

$$\alpha > \arctan \mu_H \, ,$$

wobei $\mu_H$ der Haftreibungskoeffizienten zwischen erster und zweiter Sitzfläche 14a, 14b ist.

Unter Berücksichtigung dieser Bedingungen sollte der Öffnungswinkel $\alpha$ etwa zwischen 5° und 15°, besonders vorzugsweise etwa 10°, betragen.

Bei der in den Fig. 1 und Fig. 2 dargestellten ersten Ausführungsvariante ist die Zylinderlaufbuchse 2 in einem hülsenartigen Buchsenrahmen 17 angeordnet, welcher die Zylinderlaufbuchse 2 umgibt. Die Zylinderlaufbuchse 2 ist zylinderförmig ausgebildet. Die Innenfläche des Buchsenrahmens 17 ist röhrenförmig ausgebildet und nimmt die Zylinderbuchse 2 auf. Die kegelige zweite Sitzfläche 14b wird durch den Außenmantel 19a des Buchsenrahmens 17 gebildet, der korrespondierend zur ersten Sitzfläche 14a kegelig ausgeführt ist. Der Buchsenrahmen 17 braucht sich dabei in axialer Richtung nicht über die volle Länge der Zylinderlaufbuchse 2 erstrecken, es reicht aus, wenn die Zylinderlaufbuchse 2 in einem dem Zylinderkopf 9 zugewandten oberen Teil, beispielsweise der oberen Hälfte, durch den Buchsenrahmen 17 abgestützt ist. Der Kühlflüssigkeitsmantel 12 ist zwischen Zylinderlaufbuchse 2 und dem Buchsenrahmen 17 angeordnet. Im dargestellten ersten Ausführungsbeispiel ist der Kühlflüssigkeitsmantel 12 durch eine ringförmige Ausnehmung 17a des Buchsenrahmens 17 gebildet. Es ist aber auch möglich, den Kühlflüssigkeitsmantel 12 in der Zylinderlaufbüchse 2 oder teilweise in der Zylinderlaufbuchse 2 und teilweise im Buchsenrahmen 17 anzuordnen. Der Buchsenrahmen 17 wird flüssigkeitsdicht mit der Zylinderlaufbuchse 2 verbunden, beispielsweise aufgepresst. Es sind aber auch Löt-, Schweiß- und/oder Klebeverbindungen möglich.

Bei den in den Fig. 3 bis 5 dargestellten Ausführungsbeispielen handelt es sich nicht um einen Teil der Erfindung, sondern um einen Stand der Technik, der das Verständnis der Erfindung erleichtert. Die Fig. 3 bis Fig. 5 zeigen Ausführungen ohne separatem Buchsenrahmen, welche sich nur durch die Lage des Kühlflüssigkeitsmantels 12 voneinander unterscheiden. Die zweite Sitzfläche 14b des Kegelsitzes 14 wird in jeder dieser Ausführungsvarianten durch die äußere Mantelfläche 19b des Buchsenbundes 18 der Zylinderlaufbuchse 2 gebildet.

Bei den in Fig. 3 und Fig. 4 gezeigten zweiten und dritten Ausführungsvarianten ist der Kühlflüssigkeitsmantel 12 jeweils im Buchsenbund 18 der Zylinderlaufbuchse 2 angeordnet.

Bei der in Fig. 3 gezeigten zweiten Ausführungsvariante wird der Kühlflüssigkeitsmantel 12 durch einen ringförmigen Hohlraum 18a innerhalb des Buchsenbundes 18 gebildet. Dieser Hohlraum 18a kann beispielsweise durch einen verlorenen Kern geformt sein. Eine separate Abdichtung des Kühlflüssigkeitsmantels 12 ist nicht erforderlich. Die zweite Ausführungsvariante stellt somit eine teilearme Weiterentwicklung der ersten Ausführungsvariante dar..

Dagegen wird der Kühlflüssigkeitsmantel 12 bei der in Fig. 4 dargestellten dritten Ausführung der Erfindung durch eine nutartige ringförmige Ausnehmung 18b im Außenmantel des Buchsenbundes 18 gebildet.

Fig. 5 zeigt eine weitere Ausführungsvariante, bei der der Kühlflüssigkeitsmantel 12 durch eine ringförmige Ausnehmung 8a im Aufnahmebereich 13 des Laufbuchsenträgers 8 gebildet ist.

Bei entsprechend feiner Bearbeitung der ersten und zweiten Sitzflächen 14a, 14b des Kegelsitzes 14 wird der Kühlflüssigkeitsmantel 12 beim Einsetzen der Zylinderlaufbuchse 2 in den Kegelsitz 14 bei den in Fig. 4 und Fig. 5 gezeigten dritten und vierten Ausführungen von selbst abgedichtet, ohne dass weitere Dichtungselemente erforderlich wären.

Jede der dargestellten Ausführungen hat den Vorteil, dass für Tests von unterschiedlichen Zylinderlaufbuchsen 2 diese sehr einfach getauscht werden können, ohne dass die den Laufbuchsenträger 8 und den Sensorträger 6 verbindenden Halteschrauben 24 bzw.

Schrauben 20 gelöst werden müssen. Dies erspart aufwändige Kalibrierarbeiten.

Für einen Tausch der Zylinderlaufbuchse 2 wird diese - im ersten Ausführungsbeispiel - samt dem Buchsenrahmen 17 - aus dem Laufbuchsenträger 8 herausgezogen und durch eine andere Zylinderlaufbuchse 2 ersetzt. Die neue Zylinderlaufbuchse 2 zentriert sich dabei im Kegelsitz 14 selbst. Der selbstzentrierende Kegelsitz 14 erlaubt eine einfache Trennung der Zylinderlaufbuchse 2 vom Laufbuchsenträger 8.

**Patentansprüche**

1. Einrichtung (1) zur Reibungsmessung an einer Zylinder-Kolben-Anordnung, wobei ein hin- und hergehender Kolben (3) in einer von einem Zylinderkopf (9) entkoppelten Zylinderlaufbuchse (2) einer Laufbuchseneinheit (23) angeordnet ist und die Laufbuchseneinheit (23) in einem mit einem Sensorträger verbundenen Laufbuchsenträger (8) angeordnet ist, welcher einen konzentrisch zur Zylinderachse (21) ausgebildeten drehsymmetrischen Aufnahmebereich (13) für die Zylinderlaufbuchse (2) aufweist, **dadurch gekennzeichnet, dass** die Laufbuchseneinheit (23) einen Buchsenrahmen (17) aufweist, wobei die Zylinderlaufbuchse (2) im Buchsenrahmen (17) angeordnet ist, und die Laufbuchseneinheit (23) über einen Kegelsitz (14) im Laufbuchsenträger (8) gelagert ist, wobei zumindest eine kegelige innere Mantelfläche des Aufnahmebereiches (13) eine erste Sitzfläche (14a) und eine reziprok zur ersten Sitzfläche (14a) geformte kegelige äußere Mantelfläche (19a, 19b) des Buchsenrahmens (17) eine zweite Sitzfläche (14b) des Kegelsitzes (14) zur Aufnahme und Zentrierung der Zylinderlaufbuchse (2) ausbildet.

2. Einrichtung (1) nach Anspruch 1, **dadurch gekennzeichnet, dass** der Zylinderlaufbuchse (2) zumindest ein Kühlflüssigkeitsmantel (12) zugeordnet ist.

3. Einrichtung (1) nach Anspruch 1 oder 2, **dadurch gekennzeichnet, dass** die Zylinderlaufbuchse (2) und der Buchsenrahmen (17) fest miteinander verbunden sind.

4. Einrichtung (1) nach Anspruch 2 oder 3, **dadurch gekennzeichnet, dass** zwischen dem - vorzugsweise im Wesentlichen hülsenartigen - Buchsenrahmen (17) und der Zylinderlaufbuchse (2) der Kühlflüssigkeitsmantel (12) ausgebildet ist.

5. Einrichtung (1) nach einem der Ansprüche 1 bis 4, **dadurch gekennzeichnet, dass** Zylinderlaufbuchse (2) und Buchsenrahmen (17) durch Verpressen miteinander verbunden sind.

6. Einrichtung (1) nach einem der Ansprüche 2 bis 5, **dadurch gekennzeichnet, dass** der Kühlflüssigkeitsmantel (12) zumindest teilweise in die Zylinderlaufbuchse (2) eingeformt ist.

7. Einrichtung (1) nach einem der Ansprüche 2 bis 6, **dadurch gekennzeichnet, dass** der Kühlflüssigkeitsmantel (12) - zumindest teilweise - in den Buchsenrahmen (17) eingeformt ist.

8. Einrichtung (1) nach einem der Ansprüche 1 bis 7, **dadurch gekennzeichnet, dass** die erste Sitzfläche (14a) in Bezug zur Zylinderachse (21) einen sich in Richtung des Zylinderkopfes (9) öffnenden Öffnungswinkel ($\alpha$) aufweist, welcher vorzugsweise zwischen 5° und 15°, besonders vorzugsweise etwa 10°, beträgt.

9. Einrichtung (1) nach einem der Ansprüche 1 bis 8, **dadurch gekennzeichnet, dass** die Zylinderlaufbuchse (2) und/oder der Buchsenrahmen (17) über einen Haltering (10) am Laufbuchsenträger (8) befestigt ist.

**Claims**

1. Device (1) for measuring friction on a cylinder-piston arrangement, wherein a reciprocating piston (3) is arranged in a cylinder liner (2) of a liner unit (23) decoupled from a cylinder head (9), and the liner unit (23) is arranged in a liner carrier (8) which is connected to a sensor carrier and which has a rotationally symmetrical receiving region (13) for the cylinder liner (2), said receiving region being concentric to the cylinder axis (21), **characterised in that** the liner unit (23) has a liner frame (17), wherein the cylinder liner (2) is arranged in the liner frame (17), and the liner unit (23) is mounted in the liner carrier (8) via a conical seat (14), wherein at least one conical inner jacket surface of the receiving region (13) forms a first seat surface (14a) and a conical outer jacket surface (19a, 19b) of the linear frame (17) formed reciprocally to the first seat surface (14a) forms a second seat surface (14b) of the conical seat (14) for receiving and centering the cylinder liner (2).

2. Device (1) according to claim 1, **characterised in that** the cylinder liner (2) is associated with at least one coolant jacket (12).

3. Device (1) according to claim 1 or 2, **characterised in that** the cylinder liner (2) and the liner frame (17) are firmly connected to each other.

4. Device (1) according to claim 2 or 3, **characterised in that** the coolant jacket (12) is formed between the - preferably substantially sleeve-like - liner frame (17) and the cylinder liner (2).

5.  Device (1) according to one of the claims 1 to 4, **characterised in that** the cylinder liner (2) and the liner frame (17) are interconnected by pressing.

6.  Device (1) according to one of the claims 2 to 5, **characterised in that** the coolant jacket (12) is molded at least partially into the cylinder liner (2).

7.  Device (1) according to one of the claims 2 to 6, **characterised in that** the coolant jacket (12) is molded - at least partially - into the liner frame (17).

8.  Device (1) according to one of the claims 1 to 7, **characterised in that** the first seat surface (14a) has an opening angle ($\alpha$) in relation to the cylinder axis (21) which opens in the direction of the cylinder head (9), said angle preferably being between 5° and 15°, more preferably about 10°.

9.  Device (1) according to one of the claims 1 to 8, **characterised in that** the cylinder liner (2) and/or the socket frame (17) is attached to the liner carrier (8) via a retaining ring (10).

**Revendications**

1.  Dispositif (1) permettant de mesurer le frottement dans un ensemble cylindre-piston, dans lequel un piston (3) mobile en va-et-vient est monté dans une chemise de cylindre (2) d'une unité de chemises (23), découplée de la tête de cylindre (9) et l'unité de chemises (23) est montée dans un support de chemises (8) relié à un porte-capteur, et qui comporte une zone de réception (13) de la chemise de cylindre (2), présentant une symétrie de rotation concentrique à l'axe du cylindre (21),
    **caractérisé en ce que**
    l'unité de chemise (23) comporte un cadre à douilles (17), la chemise de cylindre (2) étant montée dans le cadre à douilles (17) et l'unité de chemises (23) étant montée dans le support de chemises (8) par l'intermédiaire d'un siège conique (14), et, au moins la surface enveloppe interne conique de la zone de réception (13) formant une première surface de siège (14a) et la surface enveloppe externe conique (19a, 19b) du cadre à douilles (17), formée réciproquement à la première surface de siège (14a) formant une seconde surface de siège (14b) du siège conique (14) pour permettre la réception et le centrage de la chemise de cylindre (2).

2.  Dispositif (1) conforme à la revendication 1, **caractérisé en ce qu'**
    à la chemise de cylindre (2) est associée au moins une enveloppe de fluide de refroidissement (12).

3.  Dispositif (1) conforme à la revendication 1 ou 2, **caractérisé en ce que**
    la chemise de cylindre (2) et le cadre à douilles (17) sont reliés solidairement.

4.  Dispositif (1) conforme à la revendication 2 ou 3, **caractérisé en ce que**
    l'enveloppe de fluide de refroidissement (12) est formée entre le cadre à douilles (17) qui est de préférence essentiellement en forme de tubes et la chemise de cylindre (2).

5.  Dispositif (1) conforme à l'une des revendications 1 à 4,
    **caractérisé en ce que**
    la chemise de cylindre (2) et le cadre à douilles (17) sont reliés par compression.

6.  Dispositif (1) conforme à l'une des revendications 2 à 5,
    **caractérisé en ce que**
    l'enveloppe de fluide de refroidissement (12) est formée au moins partiellement dans la chemise de cylindre (2).

7.  Dispositif (1) conforme à l'une des revendications 2 à 6,
    **caractérisé en ce que**
    l'enveloppe de fluide de refroidissement (12) est formée au moins partiellement dans le cadre à douilles (17).

8.  Dispositif (1) conforme à l'une des revendications 1 à 7,
    **caractérisé en ce que**
    la première surface de siège (14a) définit par rapport à l'axe du cylindre (21) un angle d'ouverture ($\alpha$) s'ouvrant en direction de la tête de cylindre (9) qui est de préférence compris entre 5° et 15° et de façon particulièrement préférentielle, égal à environ 10°.

9.  Dispositif (1) conforme à l'une des revendications 1 à 8,
    **caractérisé en ce que**
    la chemise de cylindre (2) et/ou le cadre à douilles (17) est(sont) fixé(s) sur le support de chemise (8) au moyen d'une bague de retenue (10).

*Fig.1*

*Fig. 1a*

*Fig.2*

*Fig.3*

*Fig.4*

*Fig.5*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012062725 A1
- JP 2010243390 A
- JP 60031037 A
- JP 59088638 A
- WO 2005068814 A1